# EUROPÄISCHE PATENTSCHRIFT

(11) **EP 3 192 152 B1**
(45) Veröffentlichungstag und Bekanntmachung des Hinweises auf die Patenterteilung: **12.12.2018**
(21) Anmeldenummer: 15762920.5
(22) Anmeldetag: 04.09.2015
(51) Int. Cl.: H02K 3/52, H01R 4/18, H01R 4/02

(54) **ELEKTROMOTOR MIT EINER AUS WICKLUNGSDRAHTABSCHNITTEN AUSGEFÜHRTEN STATORWICKLUNG**
WINDING SEGMENT FOR WIRING STATOR COILS IN ELECTRIC MOTOR
SEGMENT DE BOBINAGE POUR L'ENROULEMENT DE BOBINES STATORIQUES D'UN MOTEUR ÉLECTRIQUE

(30) Priorität: 08.09.2014 DE 102014012966; 29.07.2015 DE 102015009620
(43) Veröffentlichungstag der Anmeldung: 19.07.2017
(73) Patentinhaber: Sew-Eurodrive GmbH & Co. KG, 76646 Bruchsal (DE)
(72) Erfinder: HETTEL, Domenik, 76474 Au am Rhein (DE); PARTHEYMÜLLER, Alexander, 76139 Karlsruhe (DE)
(86) Internationale Anmeldenummer: PCT/EP2015/001786
(87) Internationale Veröffentlichungsnummer: WO 2016/037693

(56) Entgegenhaltungen:
- EP-A2- 2 690 757
- DE-A1- 3 918 350
- US-A1- 2003 020 344

## Beschreibung

Die Erfindung betrifft ein Elektromotor mit einer aus Wicklungsdrahtabschnitten ausgeführten Statorwicklung.

Aus der DE 10 2004 022 254 B3 ist eine Hülse zur Kontaktierung von Drähten bekannt, wobei die gesamte Hülse zur Befestigung in eine Vertiefung eines Kunststoffteils eingeschoben wird. Außerdem sind die in Klemmbereichen der Hülse aufgenommenen Drähte alle gleichgerichtet, nämlich in Umfangsrichtung ausgerichtet.

Es ist allgemein bekannt, dass die Statorwicklung eines Elektromotors mit einem Versorgungskabel zur elektrischen Verbindung verbunden werden muss.

Aus der DE 39 18 350 A1 ist eine Feldmagneteinheit für Elektromotor, insbesondere für Kraftfahrzeug-Anlasser, bekannt.

Aus der EP 2 690 757 A2 ist ein Elektromotor mit einem elektrischen Verteilerring bekannt.

Aus der US 2003/0020344 A1 ist eine Verbindungsanordnung für eine Statorwicklung eines Elektromotors bekannt.

Der Erfindung liegt daher die Aufgabe zugrunde, einen Elektromotor weiterzubilden, wobei eine hohe Automatisierung erreichbar sein soll.

Erfindungsgemäß wird die Aufgabe bei dem Elektromotor nach den in Anspruch 1 angegebenen Merkmalen gelöst.

Wichtige Merkmale der Erfindung bei dem Elektromotor mit einer aus Wicklungsdrahtabschnitten ausgeführten Statorwicklung sind, dass zumindest ein Kontaktelement zur Verschaltung der Statorwicklung vorgesehen ist,
**wobei** das Kontaktelement einen Verbindungsbereich zur Befestigung des Kontaktelements am Stator aufweist,
wobei das Kontaktelement einen ersten und einen zweiten Klemmbereich aufweist,
wobei ein Wicklungsdrahtabschnitt im ersten Klemmbereich aufgenommen und elektrisch verbunden ist, insbesondere schweißverbunden ist, insbesondere kontaktschweißverbunden ist,
wobei ein Draht, insbesondere Litze, im zweiten Klemmbereich aufgenommen und elektrisch verbunden ist, insbesondere schweißverbunden ist, insbesondere kontaktschweißverbunden ist,
wobei der zweite Klemmbereich in axialer Richtung ausgerichtet ist, so dass im zweiten Klemmbereich der Draht in Umfangsrichtung ausgerichtet ist,
wobei der erste Klemmbereich senkrecht zur axialen Richtung ausgerichtet ist, insbesondere in Umfangsrichtung ausgerichtet ist, so dass im ersten Klemmbereich der Wicklungsdraht in axialer Richtung ausgerichtet ist,
wobei der zweite Klemmbereich axial, insbesondere also in Rotorachsrichtung des Elektromotors, beabstandet ist vom ersten Klemmbereich.

Von Vorteil ist dabei, dass eine hohe Automatisierung erreichbar ist, insbesondere bei der Verschaltung der Statorwicklung. Hierbei sind die Kontaktelemente mit jeweils zwei in zueinander senkrechten Richtungen ausgerichteten Klemmbereichen ausgestattet und jeweils mit einem Verbindungsberiech im restlichen Stator befestigt, insbesondere in einem Kunststoffteil, wie Endkappe oder dergleichen. Auf diese Weise ist der Wicklungsdraht der Statorwicklung jeweils axial gerichtet herausführbar und verbindbar mit einem jeweiligen Kontaktelement, insbesondere jeweils mit dem ersten Klemmbereich des jeweiligen Kontaktelements. Andererseits ist ein ringförmig verlegter Draht, wobei die Ringachse in axialer Richtung gerichtet ist, in axialer Richtung kommend in den zweiten Klemmbereichen der Kontaktelemente aufnehmbar. Somit ist aber eine hohe Automatisierung erreichbar. Denn nach Verbinden der Kontaktelemente mit dem restlichen Stator, insbesondere mit den Endkappen der Einzelzahnwicklungen, wird der Draht aus axialer Richtung kommend in die noch offenen zweiten Klemmbereiche eingelegt und danach die Schenkel der zweiten Klemmbereich zusammengedrückt bei gleichzeitigem Kontaktschweißverbinden. Diese Arbeitsschritte sind automatisiert, also ohne Handarbeit, ausführbar.

Bei einer vorteilhaften Ausgestaltung ist der erste Klemmbereich mit einem Haltebereich des Kontaktelements verbunden, mit dem auch der Verbindungsbereich verbunden ist,
wobei der zweite Klemmbereich über einen Umlenkbereich mit dem Halteberiech verbunden ist,
insbesondere wobei der erste Klemmbereich vom zweiten Klemmbereich und vom Verbindungsberiech beabstandet ist und wobei der zweite Klemmberiech vom Verbindungsbereich beabstandet ist. Von Vorteil ist dabei, dass die verschiedenen funktionellen Berieche des Kontaktelements an einem zentralen Halteberiech anliegen. Somit sind die verschiedenen funktionellen Bereich voneinander beabstandet und das Kontaktelement ist in einfacher Weise als Stanz-Biegeteil, also aus einem Blech gestanzt mit nachfolgendem Biegen, fertigbar.

Bei einer vorteilhaften Ausgestaltung weist der Umlenkbereich einen Biegewinkel auf, der in einer zur axialen Richtung senkrechten Richtung ausgerichtet ist. Von Vorteil ist dabei, dass der Umlenkbereich somit schwanenhalsförmig gekrümmt ausführbar ist und somit der zweite Klemmberiech axial höher als der erste Klemmbereich anordenbar ist. Auf diese Weise ist die Verschaltungsebene für den Draht, insbesondere Litze, zur Verschaltung der Statorwicklung und insbesondere auch zur Bildung eines Sternpunktes axial beabstandet von der Kontaktierungsebene der Wicklungsdrähte mit den Kontaktelementen.

Bei einer vorteilhaften Ausgestaltung weist der Verbindungsbereich Widerhaken auf, insbesondere zur Einrastverbindung mit einem Teil des Stators des Elektromotors. Von Vorteil ist dabei, dass eine feste Verbindung erreichbar ist, insbesondere eine unlösbare oder zumindest nur irreversibel lösbare Verbindung, also nur mit Zerstörung lösbare Verbindung.

Bei einer vorteilhaften Ausgestaltung weist die Statorwicklung zumindest eine Einzelzahnwicklung auf, die zumindest teilweise von einer Endkappe, insbesondere eine aus Kunststoff gefertigte Endkappe, aufgenommen ist, die auf einem als Blechpaket ausgeführten Einzelzahn angeordnet ist,
wobei der Verbindungsbereich rastverbunden ist mit der Endkappe. Von Vorteil ist dabei, dass die Verschaltung in automatisierter Weise ausführbar ist.

Bei einer vorteilhaften Ausgestaltung weist der erste Klemmbereich zwei Schenkel auf, die über ein als Biegeabschnitt ausgeführten Jochabschnitt verbunden sind, wobei die Normalenrichtung der Biegeebene parallel zur axialen Richtung ausgerichtet ist
und/oder
der zweite Klemmbereich weist zwei Schenkel auf, die über ein als Biegeabschnitt ausgeführten Jochabschnitt verbunden sind, wobei die Normalenrichtung der zugehörigen Biegeebene in Umfangsrichtung ausgerichtet ist, insbesondere also tangential. Von Vorteil ist dabei, dass die Klemmbereiche aus inelastisch aufeinander zu bewegbaren Schenkeln bestehen. Somit ist der Draht, insbesondere Litze oder Wicklungsdraht, einklemmbar und verschweißbar.

Bei einer vorteilhaften Ausgestaltung weist ein Schenkel des ersten Klemmbereichs einen zum anderen Schenkel des ersten Klemmbereichs hin hervor ragenden Höckerabschnitt auf, insbesondere der als Einprägung gefertigt ist
und/oder
ein Schenkel des zweiten Klemmbereichs weist einen zum anderen Schenkel des zweiten Klemmbereichs hin hervor ragenden Höckerabschnitt auf, insbesondere der als Einprägung gefertigt ist. Von Vorteil ist dabei, dass beim Aufeinanderzubewegen der Schenkel die Höckerabschnitte zuerst in Kontakt treten und somit einerseits eine gute Kontaktschweißverbindung und andererseits ein Fixieren des Drahtes, insbesondere Litze oder Wicklungsdraht, ermöglicht ist.

Bei einer vorteilhaften Ausgestaltung ist an der Kante eines Schenkels des zweiten Klemmbereichs ein Fase ausgeführt,
insbesondere so dass die Kanten der Schenkel glatt aneinander anschließen. Von Vorteil ist dabei, dass kein axialer Überstand vorahnden ist und somit eine kompakte, insbesondere axial kurz bauende Vorrichtung, ausführbar ist.
Bei einer vorteilhaften Ausgestaltung sind am Kontaktelement, insbesondere am Halteabschnitt, Höckerabschnitte ausgebildet, die an der Endkappe abgestützt sind. Von Vorteil ist dabei, dass eine gute Positionierung des Kontaktelements ausführbar ist.
Bei einer vorteilhaften Ausgestaltung ist beidseitig des Verbindungsbereichs jeweils ein Höckerabschnitt angeordnet am Kontaktelement. Von Vorteil ist dabei, dass eine verbesserte Stabilität erreichbar ist.
Bei einer vorteilhaften Ausgestaltung sind an Kanten des Kontaktelements Fasen ausgeführt. Von Vorteil ist dabei, dass eine Verletzung des Wicklungsdrahtes beziehungsweise des Drahtes, insbesondere Litze, verhinderbar ist.

Bei einer vorteilhaften Ausgestaltung ist das Kontaktelement als Stanz-Biegeteil aus einem Metallblech gefertigt,
insbesondere aus einem Kupferblech, insbesondere aus einem mit Zinn oder Silber beschichteten Kupferblech. Von Vorteil ist dabei, dass eine besonders einfache und kostengünstige Fertigung ermöglicht ist.
Bei einer vorteilhaften Ausgestaltung ist der zweite Klemmbereich axial, insbesondere also in Rotorachsrichtung des Elektromotors, weiter beabstandet von der Endkappe als der ersten Klemmbereich. Von Vorteil ist dabei, dass die Verschaltungsebene axial höher als die Kontaktierungsebene anordenbar ist.

Erfindungsgemäß verläuft der Draht, insbesondere die Litze, an einer axialen Stelle mäanderförmig zwischen einem ersten und einem zweiten Radialabstand,
wobei der erste Radialabstand kleiner als der zweite Radialabstand ist,
wobei die Litze mit zweiten Klemmbereichen von Kontaktelementen verbunden ist, die auf jeweiligen Endkappen abgestützt sind,
insbesondere mittels jeweiliger Domabschnitten der Kontaktelemente, wobei die Domabschnitte am jeweiligen Kontaktelement zur Endkappe hin hervorragen. Von Vorteil ist dabei, dass eine automatisierte Fertigung ausführbar ist, wobei der ringförmig und mäanderförmig verlegte Draht, insbesondere Litze, mittels der Mäander diejenigen Kontaktelemente umläuft, mit welchen er nicht zu verbinden ist. Die anderen, mit dem Draht zu verbindenden Kontaktelemente sind somit auf dem zweiten Radialabstand kontaktierbar. Somit ist die Kontaktierung radial außen ermöglicht und die nicht zu kontaktierenden Kontaktelemente auf demselben Radialabstand anordenbar. Somit sind alle Kontaktelemente des Motors auf demselben Radialabstand anordenbar, wobei eine regelmäßige Beabstandung ausführbar ist. Zur Bildung eines Sternpunktes sind dann die zu verbindenden Kontaktelemente mittels des Mäanders erreichbar. Zur sonstigen Verschaltung der Statorwicklung sind dann weitere Drähte, insbesondere Litze, vorsehbar, wobei diese Drähte jeweils zwar nicht mäanderförmig verlegt werden müssen, aber ebenfalls auf dem zweiten Radialabstand kontaktiert werden, insbesondere hierzu an der Kontaktierungsstelle abisoliert sind, und die Drähte an den nicht zu kontaktierenden Kontaktelemente auf dem ersten Radialabstand vorbeigeführt sind.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:

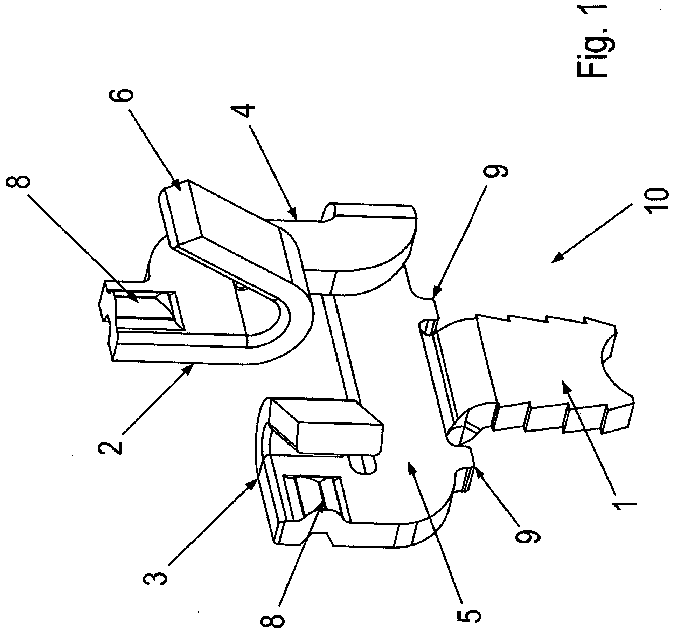

In der Figur 1 ist ein erfindungsgemäßes Kontaktelement 10 in Schrägansicht gezeigt.
In der Figur 2 ist ein Querschnitt eines Elektromotors mit Einzelzahnwicklung gezeigt
In der Figur 3 ist eine zugehörige Draufsicht auf den Verschaltungsbereich gezeigt.
In der Figur 4 ist eine Litze des Verschaltungsbereichs gezeigt, welche den Sternpunkt herstellt und somit darstellt.

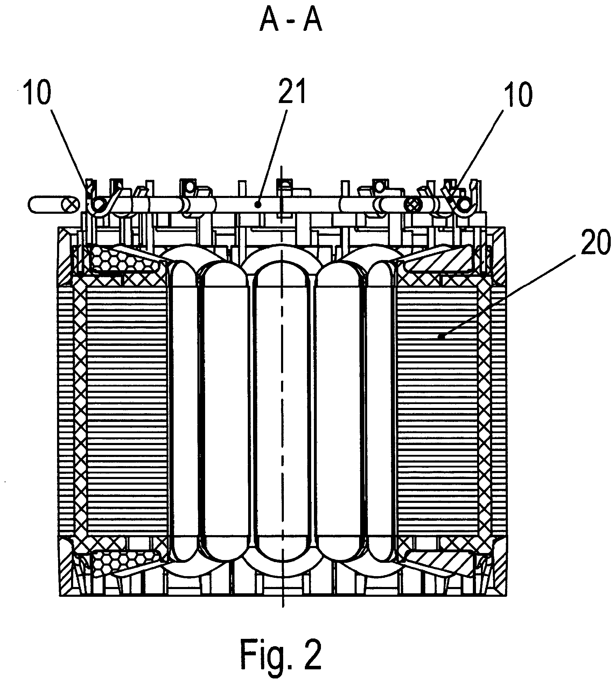

Wie in Figur 2 gezeigt weist der Elektromotor einen Stator auf, der aus Einzelzähnen zusammengesetzt ist, die jeweils eine Wicklung, also Einzelzahnwicklung, aufnehmen.

Jede dieser Wicklungen also Spulen muss elektrisch angeschlossen werden.

Beispielhaft ist hier eine Sternpunktverschaltung gezeigt, wobei eine Litze 21 mäanderförmig im Verschaltungsbereich verlegt ist.

Jeder Einzelzahn ist an seinem axialen, zum Verschaltungsbereich zugewandten Endbereich mit einer Endkappe aus Kunststoff versehen, In eine jeweilige Ausnehmung einer jeweiligen solchen Endkappe ist ein jeweiliges Kontaktelement 10 mit seinem Verbindungsbereich 1 eingeführt. Dabei weist der Verbindungsbereich 1 Widerhaken auf, also eine sägezahnartige Struktur, so dass der Verbindungsbereich 1 nur schwer oder nur unter Zerstörung wider lösbar ist von der jeweiligen Endkappe.

Der Verbindungsbereich 1 ist mit einem Halteabschnitt 5 des Kontaktelements 10 verbunden, wobei am Halteabschnitt 5 auch ein erster Klemmabschnitt 3 verbunden ist und ein Umlenkabschnitt 4, der insbesondere schwanenhalsförmig gekrümmt ausgebildet ist.

Ein zweiter Klemmabschnitt 2 ist über den Umlenkabschnitt 4 somit am Halteabschnitt 5 verbunden.

Mittels des ersten Klemmabschnitts 3 wird ein von der Statorwicklung, insbesondere von einer jeweiligen Einzelzahnwicklung her kommender Wicklungsdraht kraftschlüssig mit dem Kontaktelement 10 verbunden und verschweißt.

Hierzu weist der erste Klemmabschnitt 3 einen bewegbaren Abschnitt auf, der auf den restlichen Teil des ersten Klemmabschnitts 3 aufgedrückt wird. Beim Aufdrücken wird der Wicklungsdraht eingeklemmt und zusätzlich schweißverbunden.

Der im ersten Klemmabschnitt 3 aufgenommene Wicklungsdraht ragt in axialer Richtung durch den ersten Klemmabschnitt 3 durch. Zur Aufnahme des Wicklungsdrahts ist der erste Klemmabschnitt 3 in Umfangsrichtung als Öffnungswinkel ausgeführt.

Der Umlenkabschnitt 4 ist derart geformt, dass der zweite Klemmabschnitt 2 einen in axialer Richtung ausgerichteten Öffnungswinkel aufweist. Somit ist eine zur Verschaltung verwendete Litze 21 aus axialer Richtung her kommend einlegbar in den zweiten Klemmabschnitt 2 und verläuft im Wesentlichen in Umfangsrichtung.

Der erste und der zweite Klemmabschnitt (2, 3) weisen beide jeweils zwei Schenkelabschnitte auf, die über einen Biegeabschnitt verbunden sind. Beim Aufdrücken werden die beiden Schenkelabschnitte aufeinander zu bewegt, so dass sie im Wesentlichen zum parallel aneinander Anliegen kommen, wobei der Wicklungsdraht beziehungsweise die Litze 21 dazwischen liegt und angedrückt wird.

Beide Klemmabschnitte (2, 3) weisen eingeprägte Höckerabschnitte 8 auf, so dass sich jeweils ein Höcker an einem der jeweiligen beiden Schenkel zum anderen Schenkel hin gerichtet hervor erhebt. Auf diese Weise ist ein Herausrutschen des eingeklemmten Wicklungsdrahts oder der eingeklemmten Litze 21 verhindert. Denn beim Aufdrücken, also beim Aufeinander-zu-bewegen der jeweiligen beiden Schenkel, kommt jeweils der eingeprägte Höckerabschnitt 8 zuerst in Kontakt mit dem jeweils anderen Schenkel. Somit ist dann der Wicklungsdraht beziehungsweise die Litze zwischen dem jeweiligen Biegeabschnitt und dem Höckerabschnitt 8 eingegrenzt. Der dabei noch vorhandene Freiraum, welcher von den Schenkeln, dem Biegeabschnitt und dem Höckerabschnitt 8 begrenzt ist, wird beim weiteren Aufdrücken, also beim weiteren Aufeinander-zu-bewegen der jeweiligen beiden Schenkel, immer kleiner, so dass der Wicklungsdraht beziehungsweise die Litze 21 sicher anliegt und eine gute elektrische Verbindung mit geringem elektrischem Übergangswiderstand erreichbar ist. Außerdem verbessern die Höckerabschnitte das Schweißergebnis des nach dem oder bei dem Aufdrücken ausgeführten Kontaktschweißens.

Der Radius des jeweiligen Biegeabschnitts ist abgestimmt auf den Durchmesser des Wicklungsdrahtes beziehungsweise der Litze 21.

Der Umlenkabschnitt 4 ist mit Verrundungen ausgeführt, so dass die Kerbwirkung möglichst klein wird und die Vibrationsbeständigkeit sehr hoch.

Das Kontaktelement 10 ist als Stanz-Biegeteil auf einem Metallblech gefertigt. Vorzugsweise ist das Blech ein Kupferblech, das mit Zinn oder Silber oberflächenbeschichtet ist.

Der Umlenkbereich 4 ist vor dem Biegen vorzugsweise L-förmig und ermöglicht, dass der zweite Klemmabschnitt 2 axial über den ersten Klemmabschnitt 3 hervorragt. Somit ist ein einfaches Einlegen der Litze 21 aus axialer Richtung her kommend ermöglicht. Diese Litze ist also an einer anderen axialen Position angeordnet und elektrisch verschaltet als der Wicklungsdraht mit dem Kontaktelement 10.

An der Kante des Schenkels des zweiten Klemmbereichs 2 ist eine Fase 6 ausgeführt, so dass nach dem Aufdrücken, also im geschlossenen Zustand des zweiten Klemmbereichs 2 kein axiales Überstehen durch eine scharfe Kante vorhanden ist. Denn mittels der Fase 6 ist ein flaches Anschließen an den anderen Schenkel ermöglicht. Somit benötigt die Anschlussanordnung samt Kontaktelement 10 nur geringen axialen Bauraum.

Am Halteabschnitt 5 sind zur Endkappe hin in axialer Richtung hervorstehend, aber beabstandet vom Verbindungsberiech 1, zwei Domabschnitte 9 ausgeformt.

Diese liegen an der Endkappe an und begrenzen somit das axiale Einführen des Verbindungsbereichs 1 in die Endkappe. Außerdem wird auf diese Weise eine stabile Ausrichtung des Kontaktelements 10 relativ zur Endkappe erreicht. Die Berührflächen der Domabschnitte 9, welche die Endkappe berühren, sind somit Positionierflächen. Die Positionierung findet an der aus Kunststoff gefertigten Endkappe statt.

Auch weitere Kanten des Kontaktelements 10 sind mit einer Fase ausgeführt, so dass Beschädigungen des Wicklungsdrahtes und/oder der Litze 21 verhindert sind.

Wie in Figur 2 gezeigt, weist der Motor einen Stator auf, dessen Statorblechpaket 20 aus einzelbewickelten Polen zusammengesetzt ist, wobei die Statorwicklung aus Statorwicklungsdraht gefertigt ist, der axial herausgeführt ist zu jeweiligen Kontaktelementen 10, die in den Endkappen der einzelbewickelten Pole gehalten sind, indem die Verbindungsbereiche 1 der Kontaktelemente 10 in die Endkappen eingesteckt sind und sich mit ihren Widerhaken verrasten in der jeweiligen Endkappe.

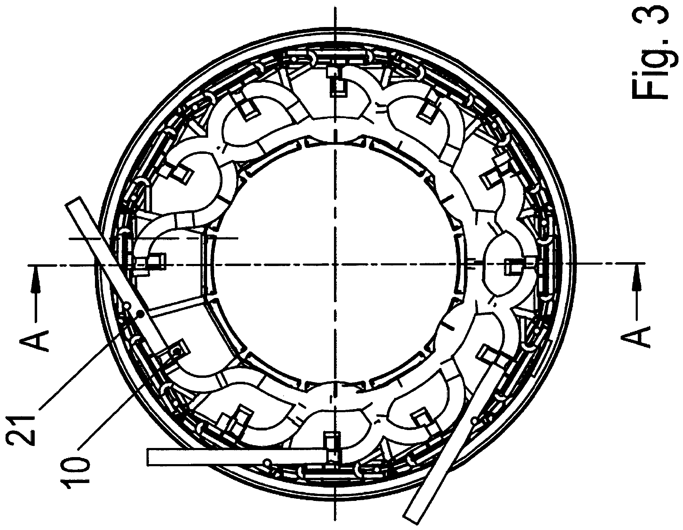

Wie in Figur 2 bis 4 gezeigt, wird die Litze 21 aus axialer Richtung her kommend in die geöffneten zweiten Klemmbereiche 2 eingelegt, die dann zugedrückt werden, so dass die Litze zwischen den Schenkeln der zweiten Klemmbereiche 2 angeordnet sind und kontaktschweißbar sind.

Die Litze 21 ist von einer Isolierung umgeben, die aber an den zur Verbindung mit den zweiten Klemmbereichen 2 vorgesehenen Verbindungsstellen, insbesondere Bereichen 40, der Litze entfernt ist. An diesen abisolierten Stellen der Litze 21 wird die Litze in den jeweiligen zweiten Klemmbereich 2 eingelegt und kontaktverschweißt.

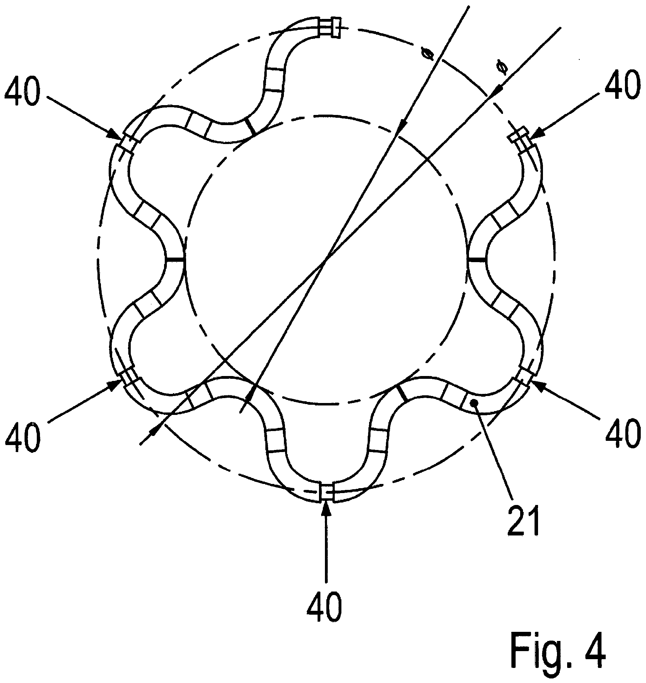

Wie in Figur 4 gezeigt ist, ist die Litze derart mäanderförmig in Umfangsrichtung zwischen einem ersten und zweiten Radialabstand verlegbar, dass eine Sternpunktverschaltung der Statorwicklung ausführbar ist. In Figur 4 ist ein sechsfacher Sternpunkt realisiert. Dabei ist der Stator als Stator einer Drehstrommaschine ausgeführt.

Die Verschaltung der Wicklungen der Phase U sind ebenfalls mit einer solchen Litze 21 ausgeführt, die mit Isolierung versehen ist aber abisoliert ist an Stellen 40. Ebenso sind die Verschaltungen der Phasen V und W mit einer solchen Litze 21, die zur Verbindung mit zweiten Klemmbereichen 2 abisoliert ist.

### Bezugszeichenliste

1 Verbindungsbereich mit Widerhaken
2 zweiter Klemmabschnitt
3 erster Klemmabschnitt
4 Umlenkabschnitt
5 Halteabschnitt
6 Fase
8 Höckerabschnitt
9 Domabschnitt
10 Kontaktelement
20 Statorblechpaket mit Statorwicklung
21 Litze
40 abisolierter Bereich

## Patentansprüche

1. Elektromotor mit einem aus Einzelzähnen zusammengesetzten Stator und einer aus Wicklungsdrahtabschnitten ausgeführten Statorwicklung, wobei Kontaktelemente (10) zur Verschaltung der Statorwicklung vorgesehen sind wobei die Kontaktelemente (10) einen Verbindungsbereich (1) zur Befestigung des Kontaktelements (10) am Stator aufweisen wobei die Kontaktelemente (10) einen ersten und einen zweiten Klemmbereich aufweisen wobei ein Wicklungsdrahtabschnitt im ersten Klemmbereich aufgenommen und elektrisch verbunden ist, insbesondere schweißverbunden ist, insbesondere kontaktschweißverbunden ist,
wobei ein Draht, inbesondere eine Litze (21), im zweiten Klemmbereich aufgenommen und elektrisch verbunden ist, insbesondere schweißverbunden ist, insbesondere kontaktschweißverbunden ist,
wobei der zweite Klemmbereich in axialer Richtung ausgerichtet ist, so dass im zweiten Klemmbereich der Draht in Umfangsrichtung ausgerichtet ist,
wobei der erste Klemmbereich senkrecht zur axialen Richtung ausgerichtet ist, insbesondere in Umfangsrichtung ausgerichtet ist, so dass im ersten Klemmbereich der Wicklungsdraht in axialer Richtung ausgerichtet ist,
wobei der zweite Klemmbereich axial, insbesondere also in Rotorachsrichtung des Elektromotors, beabstandet ist vom ersten Klemmbereich, wobei der Draht, inbesondere die Litze (21), mit zweiten Klemmbereichen von Kontaktelementen (10) verbunden ist, die auf jeweiligen Endkappen abgestützt sind,
**dadurch gekennzeichnet, dass** der Draht, inbesondere die Litze (21), an einer axialen Stelle zwischen den mehreren Kontaktelementen mäanderförmig zwischen einem ersten und einem zweiten Radialabstand verläuft,
wobei der erste Radialabstand kleiner als der zweite Radialabstand ist.

2. Elektromotor nach Anspruch 1,
**dadurch gekennzeichnet, dass**
der erste Klemmbereich mit einem Haltebereich des Kontaktelements (10) verbunden ist, mit dem auch der Verbindungsbereich (1) verbunden ist,
wobei der zweite Klemmbereich über einen Umlenkbereich mit dem Haltebereich verbunden ist,
insbesondere wobei der erste Klemmbereich vom zweiten Klemmbereich und vom Verbindungsbereich beabstandet ist und wobei der zweite Klemmbereich vom Verbindungsbereich (1) beabstandet ist.

3. Elektromotor nach mindestens einem der vorangegangenen Ansprüche,
**dadurch gekennzeichnet, dass**
der Umlenkbereich einen Biegewinkel aufweist, der in einer zur axialen Richtung senkrechten Richtung ausgerichtet ist.

4. Elektromotor nach mindestens einem der vorangegangenen Ansprüche,
**dadurch gekennzeichnet, dass**
der Verbindungsbereich (1) Widerhaken aufweist, insbesondere zur Einrastverbindung mit einem Teil des Stators des Elektromotors.

5. Elektromotor nach mindestens einem der vorangegangenen Ansprüche,
**dadurch gekennzeichnet, dass**
die Statorwicklung zumindest eine Einzelzahnwicklung aufweist, die zumindest teilweise von einer Endkappe, insbesondere einer aus Kunststoff gefertigten Endkappe, aufgenommen ist, die auf einem als Blechpaket ausgeführten Einzelzahn angeordnet ist,
wobei der Verbindungsbereich (1) mit der Endkappe rastverbunden ist.

6. Elektromotor nach mindestens einem der vorangegangenen Ansprüche,
**dadurch gekennzeichnet, dass**
der erste Klemmbereich zwei Schenkel aufweist, die über einen als Biegeabschnitt ausgeführten Jochabschnitt verbunden sind, wobei die Normalenrichtung der Biegeebene parallel zur axialen Richtung ausgerichtet ist
und/oder dass
der zweite Klemmbereich zwei Schenkel aufweist, die über einen als Biegeabschnitt ausgeführten Jochabschnitt verbunden sind, wobei die Normalenrichtung der zugehörigen Biegeebene in Umfangsrichtung ausgerichtet ist, insbesondere also tangential.

7. Elektromotor nach mindestens einem der vorangegangenen Ansprüche,
**dadurch gekennzeichnet, dass**
ein Schenkel des ersten Klemmbereichs einen zum anderen Schenkel des ersten Klemmbereichs hin hervor ragenden Höckerabschnitt (8) aufweist, der insbesondere als Einprägung gefertigt ist
und/oder dass
ein Schenkel des zweiten Klemmbereichs einen zum anderen Schenkel des zweiten Klemmbereichs hin hervor ragenden Höckerabschnitt (8) aufweist, der insbesondere als Einprägung gefertigt ist.

8. Elektromotor nach mindestens einem der vorangegangenen Ansprüche,
**dadurch gekennzeichnet, dass**
an der Kante eines Schenkels des zweiten Klemmbereichs ein Fase (6) ausgeführt ist, insbesondere so dass die Kanten der Schenkel glatt aneinander anschließen.

9. Elektromotor nach mindestens einem der vorangegangenen Ansprüche,
**dadurch gekennzeichnet, dass** an den Kontaktelementen (10), insbesondere am Halteabschnitt (5), Höckerabschnitte (8) ausgebildet sind, die an der Endkappe abgestützt sind.

10. Elektromotor nach mindestens einem der vorangegangenen Ansprüche,
**dadurch gekennzeichnet, dass**
beidseitig des Verbindungsbereichs (1) jeweils ein Höckerabschnitt (8) an den Kontaktelementen (10) angeordnet ist.

11. Elektromotor nach mindestens einem der vorangegangenen Ansprüche,
**dadurch gekennzeichnet, dass**
an Kanten der Kontaktelemente (10) Fasen (6) ausgeführt sind.

12. Elektromotor nach mindestens einem der vorangegangenen Ansprüche,
**dadurch gekennzeichnet, dass** die Kontaktelemente (10) als Stanz-Biegeteil aus einem Metallblech gefertigt sind insbesondere aus einem Kupferblech, insbesondere aus einem mit Zinn oder Silber beschichteten Kupferblech.

13. Elektromotor nach mindestens einem der vorangegangenen Ansprüche,
**dadurch gekennzeichnet, dass**
der zweite Klemmbereich axial, insbesondere also in Rotorachsrichtung des Elektromotors, weiter von der Endkappe beabstandet ist als der erste Klemmbereich.

## Claims

1. Electric motor having a stator assembled from single teeth, and having a stator winding constructed from winding wire sections,
wherein contact elements (10) are provided for interconnecting the stator winding,
wherein the contact elements (10) have a connection region (1) for fastening the contact element (10) to the stator,
wherein the contact elements (10) have a first and a second clamping region,
wherein a winding wire section is received in the first clamping region and is electrically connected, in particular connected by welding, in particular connected by contact welding,
wherein a wire, in particular a strand (21), is received in the second clamping region and is electrically connected, in particular connected by welding, in particular connected by contact welding,
wherein the second clamping region is oriented in the axial direction so that the wire in the second clamping region is oriented in the circumferential direction,
wherein the first clamping region is oriented perpendicular to the axial direction, in particular is oriented in the circumferential direction, so that the winding wire in the first clamping region is oriented in the axial direction,
wherein the second clamping region is at a distance from the first clamping region in the axial direction, that is to say in particular in the axial direction of the rotor of the electric motor,
wherein the wire, in particular the strand (21), is connected to second clamping regions of contact elements (10), which are supported on respective end caps,
**characterized in that**
the wire, in particular the strand (21), runs in a meandering manner between a first and a second radial distance at an axial location between the plurality of contact elements, wherein the first radial distance is smaller than the second radial distance.

2. Electric motor according to claim 1,
**characterized in that**
the first clamping region is connected to a holding region of the contact element (10), to which the connection region (1) is also connected,
wherein the second clamping region is connected to the holding region via a deflection region,
in particular wherein the first clamping region is at a distance from the second clamping region and from the connection region, and wherein the second clamping region is at a distance from the connection region (1).

3. Electric motor according to at least one of the preceding claims,
**characterized in that**
the deflection region has a bend angle which is oriented in a direction perpendicular to the axial direction.

4. Electric motor according to at least one of the preceding claims,
**characterized in that**
the connection region (1) has barbs, in particular for latching connection to a part of the stator of the electric motor.

5. Electric motor according to at least one of the preceding claims,
**characterized in that**
the stator winding has at least one single-tooth winding, which is at least partially accommodated by an end cap, in particular an end cap made of plastic, which is arranged on a single tooth configured as a laminated core,
wherein the connection region (1) is connected to the end cap by latching.

6. Electric motor according to at least one of the preceding claims,
**characterized in that**
the first clamping region has two limbs which are connected via a yoke section configured as a bent section, wherein the normal direction of the bending plane is oriented parallel to the axial direction,
and/or **in that**
the second clamping region has two limbs which are connected via a yoke section configured as a bent section, wherein the normal direction of the associated bending plane is oriented in the circumferential direction, that is to say in particular tangentially.

7. Electric motor according to at least one of the preceding claims,
**characterized in that**
one limb of the first clamping region has a bump section (8) which protrudes towards the other limb of the first clamping region, said bump section in particular being produced as an embossed area,
and/or **in that**
one limb of the second clamping region has a bump section (8) which protrudes towards the other limb of the second clamping region, said bump section in particular being produced as an embossed area.

8. Electric motor according to at least one of the preceding claims,
**characterized in that**
a chamfer (6) is formed on the edge of one limb of the second clamping region, in particular so that the edges of the limbs smoothly adjoin one another.

9. Electric motor according to at least one of the preceding claims,
**characterized in that**
bump sections (8) are formed on the contact elements (10), in particular on the holding section (5), said bump sections being supported against the end cap.

10. Electric motor according to at least one of the preceding claims,
**characterized in that**
a respective bump section (8) is arranged on the contact elements (10) on each side of the connection region (1).

11. Electric motor according to at least one of the preceding claims,
**characterized in that**
chamfers (6) are formed on edges of the contact elements (10).

12. Electric motor according to at least one of the preceding claims,
**characterized in that**
the contact elements (10) are produced as a stamped and bent part from a metal sheet, in particular from a copper sheet, in particular from a copper sheet coated with tin or silver.

13. Electric motor according to at least one of the preceding claims,
**characterized in that**
the second clamping region is at a greater distance than the first clamping region from the end cap in the axial direction, that is to say in particular in the axial direction of the rotor of the electric motor.

## Revendications

1. Moteur électrique avec un stator composé de dents individuelles et un enroulement statorique réalisé à partir de tronçons de fil d'enroulement,
sachant que des éléments de contact (10) sont prévus pour le câblage de l'enroulement statorique,
sachant que les éléments de contact (10) présentent une zone de liaison (1) pour la fixation de l'élément de contact (10) sur le stator,
sachant que les éléments de contact (10) présentent une première et une deuxième zone de serrage,
sachant qu'un tronçon de fil d'enroulement est reçu dans la première zone de serrage et y est électriquement relié, en particulier relié par soudage, en particulier relié par soudage par contact,
sachant qu'un fil métallique, en particulier un fil toronné (21), est reçu dans la deuxième zone de serrage et y est électriquement relié, en particulier relié par soudage, en particulier relié par soudage par contact,
sachant que la deuxième zone de serrage est orientée en direction axiale, de sorte que le fil métallique est orienté en direction circonférentielle dans la deuxième zone de serrage, sachant que la première zone de serrage est orientée perpendiculairement à la direction axiale, en particulier est orientée en direction circonférentielle, de sorte que le fil d'enroulement est orienté en direction axiale dans la première zone de serrage,
sachant que la deuxième zone de serrage est distante de la première zone de serrage axialement, en particulier donc dans la direction de l'axe du rotor du moteur électrique, sachant que le fil métallique, en particulier le fil toronné (21), est relié à des deuxièmes zones de serrage d'éléments de contact (10) qui s'appuient sur des coiffes terminales respectives,
**caractérisé en ce que** le fil métallique, en particulier le fil toronné (21), à un emplacement axial entre les éléments de contact, s'étend en méandres entre une première et une deuxième distance radiale,
sachant que la première distance radiale est inférieure à la deuxième distance radiale.

2. Moteur électrique selon la revendication 1, **caractérisé en ce que** la première zone de serrage est reliée à une zone de maintien de l'élément de contact (10) à laquelle est également reliée la zone de liaison (1),
sachant que la deuxième zone de serrage est reliée à la zone de maintien par l'intermédiaire d'une zone de renvoi,
sachant en particulier que la première zone de serrage est distante de la deuxième zone de serrage et de la zone de liaison, et sachant que la deuxième zone de serrage est distante de la zone de liaison (1).

3. Moteur électrique selon au moins une des revendications précédentes, **caractérisé en ce que** la zone de renvoi présente un angle de cintrage qui est orienté dans une direction perpendiculaire à la direction axiale.

4. Moteur électrique selon au moins une des revendications précédentes, **caractérisé en ce que** la zone de liaison (1) présente des barbes, en particulier pour la liaison par enclenchement avec une partie du stator du moteur électrique.

5. Moteur électrique selon au moins une des revendications précédentes, **caractérisé en ce que** l'enroulement statorique présente au moins un enroulement à dent individuelle qui est reçu au moins partiellement par une coiffe terminale, en particulier une coiffe terminale fabriquée en matière plastique, qui est disposée sur une dent individuelle réalisée sous forme d'empilage de tôles,
sachant que la zone de liaison (1) est reliée par encliquetage à la coiffe terminale.

6. Moteur électrique selon au moins une des revendications précédentes, **caractérisé en ce que** la première zone de serrage présente deux branches qui sont reliées par l'intermédiaire d'une partie formant entretoise réalisée sous forme de partie cintrée, sachant que la direction normale au plan de cintrage est orientée parallèlement à la direction axiale,
et/ou **en ce que** la deuxième zone de serrage présente deux branches qui sont reliées par l'intermédiaire d'une partie formant entretoise réalisée sous forme de partie cintrée, sachant que la direction normale au plan de cintrage correspondant est orientée en direction circonférentielle, en particulier donc tangentiellement.

7. Moteur électrique selon au moins une des revendications précédentes, **caractérisé en ce qu'**une branche de la première zone de serrage présente une partie formant bosse (8) faisant saillie en direction de l'autre branche de la première zone de serrage, partie qui est en particulier réalisée par estampage,
et/ou **en ce qu'**une branche de la deuxième zone de serrage présente une partie formant bosse (8) faisant saillie en direction de l'autre branche de la deuxième zone de serrage, partie qui est en particulier réalisée par estampage.

8. Moteur électrique selon au moins une des revendications précédentes, **caractérisé en ce qu'**un chanfrein (6) est réalisé sur l'arête d'une branche de la deuxième zone de serrage, en particulier de sorte que les arêtes des branches se raccordent mutuellement à plat.

9. Moteur électrique selon au moins une des revendications précédentes, **caractérisé en ce que** des parties formant bosses (8), qui s'appuient contre la coiffe terminale, sont formées sur les éléments de contact (10), en particulier sur la partie de maintien (5).

10. Moteur électrique selon au moins une des revendications précédentes, **caractérisé en ce qu'**une partie formant bosse respective (8) est disposée de part et d'autre de la zone de liaison (1) sur les éléments de contact (10).

11. Moteur électrique selon au moins une des revendications précédentes, **caractérisé en ce que** des chanfreins (6) sont réalisés sur les arêtes des éléments de contact (10).

12. Moteur électrique selon au moins une des revendications précédentes, **caractérisé en ce que** les éléments de contact (10) sont fabriqués sous forme de pièce découpée et pliée à partir d'une tôle métallique, en particulier d'une tôle de cuivre, en particulier d'une tôle de cuivre revêtue d'étain ou d'argent.

13. Moteur électrique selon au moins une des revendications précédentes, **caractérisé en ce que** la deuxième zone de serrage est plus distante axialement, en particulier donc dans la direction de l'axe du rotor du moteur électrique, de la coiffe terminale que la première zone de serrage.
